# EUROPEAN PATENT SPECIFICATION

(11) **EP 1 662 733 B1**
(45) Date of publication and mention of the grant of the patent: **08.09.2010**
(21) Application number: 03785470.0
(22) Date of filing: 26.12.2003
(51) Int. Cl.: H04L 29/12, H04L 29/06

(54) **A SIGNALING AGENT IMPLEMENTING METHOD**
SIGNALISIERUNGS-AGENT-IMPLEMENTIERUNGSVERFAREN
PROCEDE DE MISE EN OEUVRE D'UN AGENT DE SIGNALISATION

(30) Priority: 06.08.2003 CN 03140107
(43) Date of publication of application: 31.05.2006
(73) Proprietor: ZTE Corporation, Shenzhen, Guangdong 518057 (CN)
(72) Inventor: QIAO, Kezhi, Shenzhen Guangdong 518057 (CN)
(74) Representative: Caspary, Karsten
(86) International application number: PCT/CN2003/001130
(87) International publication number: WO 2005/015863

(56) References cited:
- EP-A2- 1 109 368
- WO-A2-00/76107
- JP-A- 2002 084 363
- US-A1- 2002 141 390
- US-A1- 2003 033 418
- US-A1- 2003 227 905

## Description

### FIELD OF THE INVENTION

The present invention relates to a field of communication technology, specifically, a method for realizing media stream forwarding among networks by utilizing a signalling agent of the media gateway Control (MEGACO) Protocol.

### BACKGROUND

The MEGACO protocol is an RFC3015 protocol of the Internet Engineering Task Force (IETF).

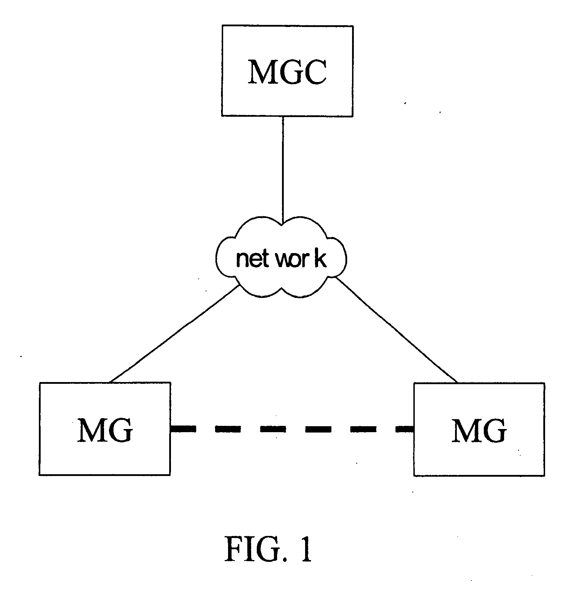

FIG. 1 is a schematic diagram showing the realization of a system networking by way of MEGACO protocol, in which the dotted line represents a media stream. With an idea of adopting a decomposed gateway, the MEGACO protocol decomposes the original centralized processing gateway of signalling and media into two parts: a media gateway (MG) and a media gateway controller (MGC). The media gateway controller MGC controls the media gateway (MG) action with a MEGACO protocol. When the media gateway controller (MGC) sends a command of performing to the media gateway (MG), the media gateway (MG) executes the command and then returns the result. The media gateway MG may also initiatively report observed events to the media gateway controller (MGC) for executing. A logical relation in MEGACO protocol is represented by a link model, and two essentially basic members in this link model are contexts and terminations, wherein terminations are logic entities of the media gateway (MG) for sending and/or receiving one or multiple media streams, and contexts are relationships of connection and topology among terminations.

The main commands between the media gateway controller (MGC) and the media gateway (MG) include SERVICECHANGE, ADD, MODIFY, SUBTRACT and NOTIFY commands, etc.

A signalling agent means that media gateway controllers (MGC) and media gateways (MG), in different networks and not being reachable by one another by routes, realize MEGACO signalling traversing and traversing media streams controlled by MEGACO signalling through networks through the signalling agent, so as to enable media gateway controllers to control media gateways (MG) in other networks completing call establishing and media streams intercommunicating between different networks.

Conventional methods for realizing signalling and media agent based on network address translation (NAT) cannot implement entire transparence of agent equipments to the media gateway controller (MGC), so that it can not implement direct control of media gateway controller (MGC) on media gateways (MG) in other networks not being reachable by one another by routes. Thus the complexity of call services on the media gateway controller is increased and meanwhile it needs to configure detailed information of the corresponding media gateways (MG) on agent equipment. When a media gateway (MG) has changed, it needs to change configuration on both the media gateway controller (MGC) and the agent equipment simultaneously, and thereby operation maintenance cost is increased.

US 2003/0033418 A1 describes methods and systems using a Media Gateway Control Protocol (MGCP) Application Layer Gateway (ALG) for delivery of VoIP packets to Internet Protocol (IP) phones and to client adapters (CA). The invention provides a customer premises device acting as a proxy between a single Wide Area Network (WAN) Extranet IP address and any number of MGCP client adapters and MGCP phones. To act as a proxy, the MALG parses MGCP signaling packets and opens communications ports as required to deliver VoIP. The MGCP ALG (MALG) registers MGCP phones and identifies required service parameters. The MALG represents all registered MGCP phones to the Extranet via its single public WAN IP address. The MALG is integrated into premises networks via flexible multi-port LAN connections. The MALG can connect to existing premises networks via multiple configuration options. These options are part of the unique MALG capabilities.

US 2002/0141390 A1 discloses a system and method for IP telephony. The system includes at least one IP telephone (IPT), a Service Gateway (SG), and a Media Gateway Controller (MGC). After the IPT is activated, the SG performs client DHCP lease negotiation with the IPT, using an identifier of the IPT to assign a range of ports to the IPT, and providing DHCP lease information, which is stored on the SG and the IPT. Opera-tional software is downloaded from a TFTP server and executed by the IPT for initialization. The MGC registers the IPT, which then performs IP communications using one or more ports in the range of assigned ports, where the SG receives packets, performs NAPPT on source/destination IP addresses in the packet header for outgoing/incoming calls, while leaving port information unchanged, and sends the packets on to their destination, where the IPT is uniquely identified using a public IP address and port number.

### SUMMARY OF THE INVENTION

The technical problem to be solved in the present invention is to provide a method for realizing signalling agent to implement that MEGACO signalling and media controlled by MEGACO signalling can be transparently traversed through different networks, and the media network controller controls on media gateways in another network as expediently as in the same network for realizing multiple value-added functions in call services; meanwhile in which no media gateway information needs be configured on the agent equipment, and media gateway information is dynamically generated according to MEGACO signalling by agent equipments, so that management on operating the media gateway controller and agent equipments is simplified when media gateways are changed. This object is achieved by the features of claim 1.

In the method of the present invention, each media gateway under control of the same media gateway controller has a unique message identifier (MiD) in MEGACO signalling, and the media gateway controller distinguishes different media gateways on the basis of the message identifier.

In the method of the present invention, the message identifier of each MEGACO signalling sent to the media gateway by the media gateway controller includes the message identifier of the media gateway.

In the method of the present invention, IP address and port of the media gateway controller configured on the media gateway have the same configuration with the second network address and the signalling port of the agent equipment.

In the method of the present invention, the registering procedure in step 1 comprises the following steps of :
(1) the media gateway sending register message to the media gateway controller, the agent equipment receiving the message at the second network address and the corresponding signalling port, recording the IP source address and the port number of the media gateway sending the message, and the message identifier of the media gateway, etc, to generate particular information about the media gateway;
(2) the agent equipment forwarding the register message to the media gateway controller through the first network address;
(3) the media gateway controller registering the media gateway according to message identifier thereof, after registering successfully, the media gateway controller returning a reply signalling to the media gateway, the message identifier of the reply signalling including the message identifiers of both the media gateway and the media gateway controller; and
(4) the agent equipment receiving the reply signalling from the first network address, analyzing the message identifier of the media gateway in the reply signalling, searching and obtaining address of the media gateway from information recorded, and forwarding to corresponding media gateway through the second network address.

In the method of the present invention, the step 3 further comprises :
(1) the agent equipment establishing or modifying the corresponding media stream forwarding port and forwarding table after the agent equipment receives the MEGACO signalling of establishing or modifying media stream port sent to the media gateway by the media gateway controller, replacing corresponding media address information in the MEGACO signalling with corresponding network address information of the media forwarding port on the agent equipment, and then forwarding the signalling to corresponding media gateway;
(2) the media gateway processing the MEGACO signalling received, and returning a reply signalling;
(3) the agent equipment modifying the forwarding table of the corresponding media stream forwarding port according to the reply signalling received, replacing the media address information in the signalling by the corresponding network address information of the media stream forwarding port at the agent equipment, and forwarding to the media gateway controller; and
(4) after calling ends, the media gateway controller sending subtracting signalling for releasing media stream port to the media gateway, after the agent equipment receives the signalling, releasing the corresponding media stream forwarding port, and forwarding the signalling to the corresponding media gateway.

In the method of the present invention, the step 3 further comprises: if the signalling received by the agent equipment is a reply signalling of establishing a media stream port, the agent equipment further recording the termination ID of the media stream port of the media gateway and determining the media stream forwarding port to be released according to the termination ID.

In the method for realizing signalling agent based on MEGACO protocol provided by the present invention, there is no need to configure any information of media gateway based on MEGACO protocol in the agent equipment because of adopting technical solutions mentioned above, and the media gateways are controlled directly by the media gateway controller. The media gateway controller does not recognize existence of the agent equipment between itself and the media gateway, and the media gateway controller needs not be concerned with whether the media gateways are in the same network as itself, which facilitates to implement multiplex services on the media gateway controller. Meanwhile it brings great convenience to operation and administration and maintenace. Any modification on a media gateway service control will be only performed on the media gateway controller, which does not need to be performed at the agent equipment again. Furthermore according to the present invention multiple agent equipments may be used for implementing the media gateway traversing through more networks for multiple times, stage by stage.

### BRIEF DESCRIPTION OF THE DRAWINGS

FIG. 1 is a schematic diagram showing a MEGACO protocol system in a prior art;
FIG. 2 is a schematic graph of a network system in one embodiment of the present invention for realizing a MEGACO signalling agent;
FIG 3 is a flow chart for dynamically generating media gateway information on the agent equipment according to the present invention; and
FIG 4 is a schematic graph for realizing a MEGACO signalling agent on the agent equipment according to the present invention.

### DETAILED DESCRIPTION OF THE INVENTION

The technical solutions of the present invention will be further described in details in accompanying with the drawings attached and embodiments below.

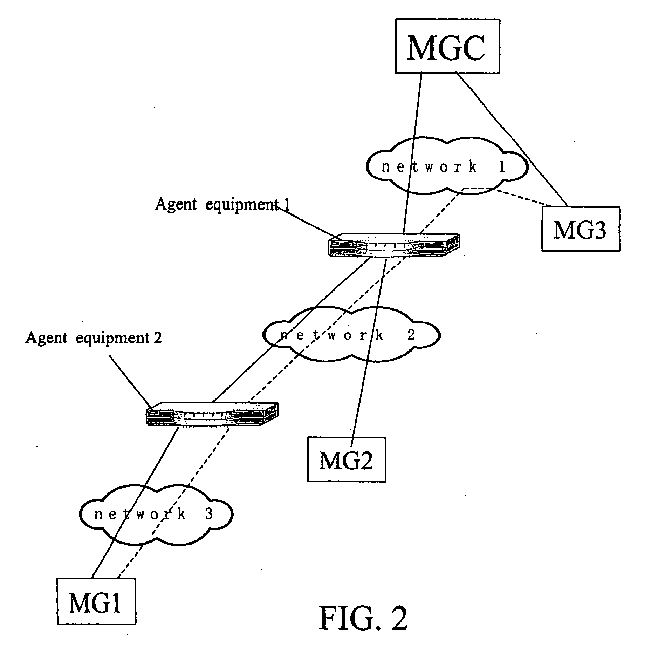

A technical solution for solving technical problems by the present invention is summarized below: a media gateway (MG) and a media gateway controller (MGC) are located in different networks, and transparent traversing of MEGACO signalling through networks is realized by a signalling agent function of at least one agent equipment. FIG 2 is a schematic graph of a network system with application of the method of the present invention in which the dotted line represents a media stream. The media gateway controller MGC controls media gateways, MG1, MG2 and MG3, wherein the media gateway controller MGC and the media gateway MG3 locate in network 1, the media gateway MG1 locates in network 3, the media gateway MG2 locates in network 2, and it needs to pass network 2 when going between network 1 and network 3. Thus agent equipment 1 is provided between network 1 and network 2, and agent equipment 2 is provided between network 2 and network 3. MEGACO protocol is adopted between the media gateway controller MGC and media gateways MG1, MG2 and MG3. The agent equipment for the media gateway controller and the media gateway located in different networks is an independent equipment to provide a function of signalling and media agent among networks in a packet switching network, which is for supplying signalling and media agent among different networks and network address translation.

Agent equipment 1 has at least two network addresses, in which one is a first network address in network 1 of the media gateway controller MGC side, and the other one is a second network address in network 2 of media gateway MG2 side. IP address and port of the media gateway controller configured on media gateway MG2 is the second network address and the corresponding port of agent equipment 1. In the same way, agent equipment 2 has also at least two network addresses, in which one is a first network address in network 2 beside media gateway MG2, and the other one is a second network address in network 3 of media gateway MG1 side. IP address and port of the media gateway controller MGC configured on media gateway MG1 is the second network address and the corresponding port of agent equipment 2.

The message identifier (MID) of the MEGACO signalling sent by the media gateway comprises the domain name of the media gateway, the IP address or equipment name, and so on; whereas the message identifier (MID) of the MEGACO signalling sent by the media gateway controller MGC comprises both message identifiers (MID) of the media gateway controller and the message identifiers (MID) of the destination media gateway.

The message identifier (MID) of each media gateway under control of a same media gateway controller is unique, so the media gateway controller can identify a unique media gateway MG in accordance with its message identifier MID.

The present invention will be described by a process for realizing a signalling agent between the media gateway controller MGC and media gateway MG2 through agent equipment 1, shown in FIG 1. The basic steps of the present invention are the following:
Firstly, the media gateway MG registers to the media gateway controller MGC. The agent equipment dynamically records the message identifier MID of the media gateway MG to be registered and the network address according to register message sent by the media gateway MG After the media gateway MG registers successfully, for every MEGACO signalling, the agent equipment may obtain information on the corresponding media gateway according to the message identifier MID in the signalling, and complete forwarding a MEGACO message between the media gateway MG and the media gateway controller MGC.
Secondly, for MEGACO signalling unconcerned with a media stream port, the agent equipment directly forwards it in accordance with the message identifier MID.

Then, after the agent equipment receives a MEGACO signalling for adding or modifying a media stream port sent to the media gateway MG by the media gateway controller, the corresponding media stream forwarding port and forwarding table are added or modified on the agent equipment; the relevant media stream network address information in the MEGACO signalling is replaced with information on the corresponding network address of the media stream forwarding port on the agent equipment and then the signalling is forwarded to the corresponding media gateway MG.

After the media gateway MG processes the signalling, a reply signalling is returned to the media gateway controller MGC.

After receiving the reply signalling relevant to the media stream network address returned to the media gateway controller from the media gateway, the agent equipment modifies a forwarding table of the corresponding media stream forwarding port, replaces the media information in the signalling with information on the corresponding network address of the media stream forwarding port on the agent equipment, and sends it to the media gateway controller MGC. If the signalling is a reply signalling for establishing a media stream port, the termination ID of the media stream port for the media gateway MG should be also recorded on the agent equipment.

When calling finishes, the media gateway controller MGC sends a subtract signalling for releasing the media stream port to the media gateway, the agent equipment releases the corresponding media stream forwarding port in accordance with the termination ID, and forwards the signalling to corresponding media gateway MG

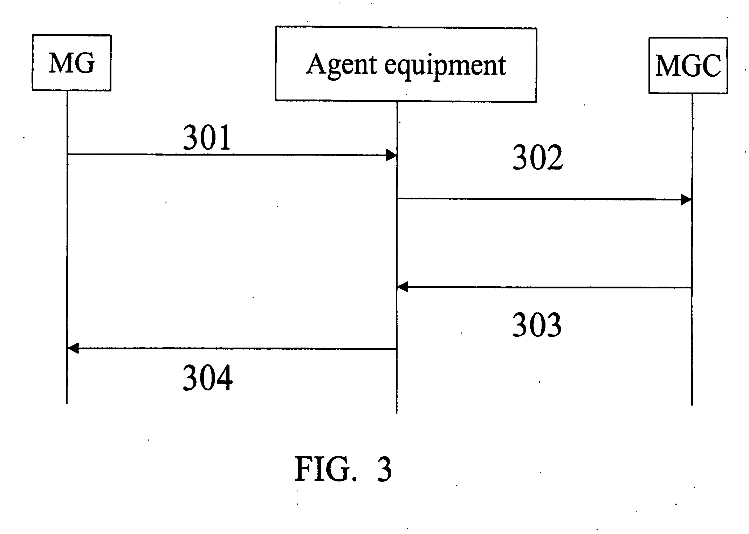

FIG 3 illustrates the registering procedure of the media gateway.
Step 301: The media gateway MG sends a register (Service Change) message to the media gateway controller, the agent equipment receives the message on the second network address and the corresponding port, records the IP source address and port number of the media gateway MG sending the message and message identifier of this media gateway and so on, and generates particular information related to the media gateway.
Step 302: The agent equipment forwards the register message to the media gateway controller MGC from the first network address.
Step 303: The message gateway controller MGC accepts the registering of the media gateway according to the message identifier of the media gateway, and, after registering successfully, the media gateway controller MGC sends a reply signalling to the media gateway, in which the message identifier MID in the reply signalling includes MID information of the media gateway MG and the media gateway controller MGC.
Step 304: After receiving the reply signalling on the first network address, the agent equipment analyses the MID information of the media gateway MG in the reply signalling, searches and obtains the address of the media gateway MG from the recorded information, and then forwards the reply signalling to the corresponding media gateway MG from the second network address.

After the media gateway registers successfully, for MEGACO signalling that is unconcerned with media streams and transmitted between the media gateway controller MGC and the media gateway MG, the agent equipment can forward directly in accordance with message identifier MID in the signalling; for the signalling concerned with media streams, the agent equipment replaces the media stream network address correspondingly, and then forwards according to the message identifier MID.

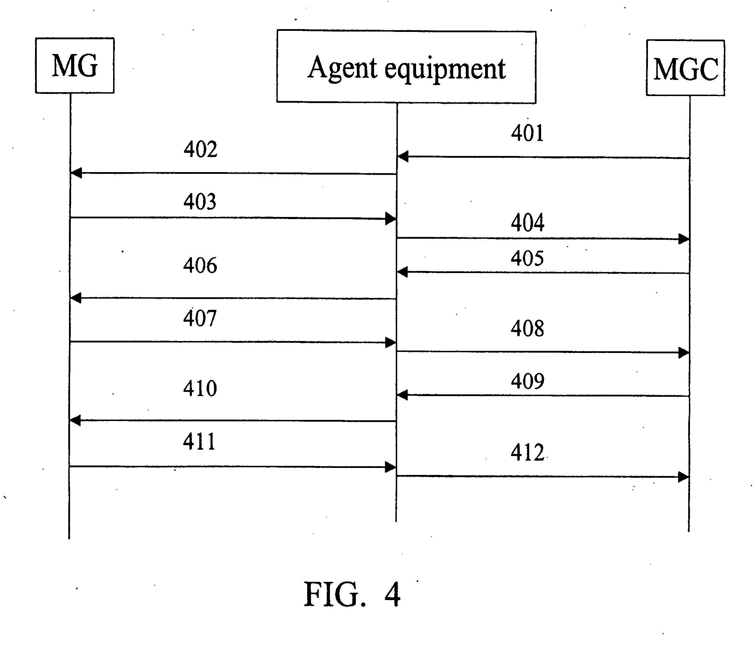

FIG 4 illustrates a process of forwarding media streams among networks by MEGACO signalling agent through the agent equipment according to the invention.
Step 401: The media gateway controller MGC sends an add signalling to the media gateway for establishing a media stream port on the media gateway MG, and after analyzing the signalling, the agent equipment establishes a corresponding media stream forwarding table and port on the agent equipment. If the add signalling includes a remote media stream network address, the IP address and port in the signalling are used for establishing a media stream forwarding table on the media stream forwarding port, and then the IP address and port in the signalling are modified to the second network address and the media stream forwarding port of the agent equipment.
Step 402: The agent equipment forwards the add signalling with the modified remote media stream network address to the media gateway MG.
Step 403: After establishing the media stream port successfully, the media gateway MG sends a reply for the add signalling; after receiving the reply, the agent equipment modifies the corresponding media stream forwarding table on the media stream forwarding port with the IP address and port in the local media stream network address in the reply, replaces the IP address and port in the local media stream network address in the reply signalling with the first network address and the media stream forwarding port of the agent equipment, and meanwhile records the media termination ID returned from the media gateway.
Step 404: The agent equipment forwards the reply signalling with the modified local media stream network address to the media gateway controller MGC.
Step 405: When the media gateway controller MGC sends a modify (MODIFY) signalling for modifying a media stream port on the media gateway MG to the media gateway, the agent equipment finds the corresponding media stream forwarding port according to the termination ID, modifies the media stream forwarding table of media stream forwarding port with the IP address and port of the remote media stream network address in the MODIFY signalling, then modifies the IP address and port in the signalling to the second network address of the agent equipment and the corresponding media stream forwarding port.
Step 406: The agent equipment forwards the modify signalling with the modified remote media stream network address to the media gateway MG.
Step 407: The media gateway MG returns a reply for a successful modification on the media stream port.
Step 408: The agent equipment directly forwards the reply message to the media gateway controller MGC.
Step 409: When calling finishes, the media gateway controller MGC sends a SUBTRACT signalling for releasing the media stream port to the media gateway MG, and the agent equipment finds the corresponding media stream forwarding port according to the termination ID recorded above and releases the corresponding media stream forwarding port.
Step 410: The agent equipment forwards the SUBTRACT signalling to the corresponding media gateway MG.
Step 411: The media gateway MG releases the media stream port successfully, and sends a reply to the media gateway controller MGC.
Step 412: The agent equipment forwards the reply message to the media gateway controller MGC.

The method for realizing multiple traversing of media gateway MG through multiple networks by multiple agent equipments by multiple stages is similar to the process above; each agent equipment only needs to replace IP address and port number contained in the media information in the signalling correspondingly with IP address and port of network 1 or network 2 in which the agent equipment is located, and to establish a corresponding media stream forwarding table; and when releasing, the media stream forwarding table is released according to the termination ID.

With the method of the present invention, the agent equipment needs not be configured with any information related to the media gateway MG based on the MEGACO protocol, and the media gateway MG is directly controlled by the media gateway controller. The media gateway controller MGC does not need to know the existence of an agent equipment between itself and the media gateway MG, and to concern whether the media gateway is in the same network as itself, which facilitates services implementing on the media gateway controller. The method of the present invention also highly facilitates user management, any change of service control on the media gateway MG only needs to be performed on the corresponding media gateway controller without any modification on the agent equipment. Furthermore, multiple agent equipments may realize the media gateway traversing through multiple networks for many times, stage by stage.

## Claims

1. A method for realizing a signalling agent in a network system, the network system comprising media gateways (MG, MG1, MG2, MG3) and a media gateway controller (MGC) in different networks, and at least one agent equipment on a boundary of the different networks, in which the Media Gateway Control MEGACO Protocol is adopted between the media gateways (MG, MG1, MG2, MG3) and the media gateway controller (MGC); wherein the agent equipment has at least two network addresses, one being a first network address in the network of the media gateway controller (MGC), the other one being a second network address in the network of the media gateway side; the method comprising the following steps:
step 1: a media gateway (MG, MG1, MG2, MG3) requesting register to the media gateway controller (MGC), and the agent equipment recording a message identifier MID of the media gateway (MG, MG1, MG2, MG3) to be registered and the network address according to the register message sent by the media gateway (MG, MG1, MG2, MG3);
step 2: the agent equipment receiving MEGACO signalling for establishing or modifying a media stream port sent to the media gateway (MG, MG1, MG2, MG3) from the media gateway controller (MGC), establishing or modifying a corresponding media stream forwarding port and forwarding table on the agent equipment, replacing relevant media information in MEGACO signaling with the corresponding network address information of the media stream forwarding port on the agent equipment, and forwarding the signalling to the corresponding media gateway (MG, MG1, MG2, MG3);
step 3: the media gateway (MG, MG1, MG2, MG3) processing the received MEGACO signalling, and returning a reply signalling; the agent equipment modifying the forwarding table of the corresponding media stream forwarding port according to the reply signalling received, replacing the media information in the signalling with the corresponding network address information of the media stream forwarding port on the agent equipment, and forwarding to the media gateway controller (MGC);
step 4: the media gateway controller (MGC) sending a subtract signalling for releasing the media stream port to the media gateway (MG, MG1, MG2, MG3) after calling finishes, the agent equipment releasing the corresponding media stream forwarding port after receiving the signalling, and forwarding the signalling to the corresponding media gateway (MG, MG1, MG2, MG3);
further comprising the step of: for a MEGACO signalling that is unconcerned with the media stream port of the media gateway (MG, MG1, MG2, MG3), the agent equipment forwarding the signalling according to the message identifier MID in the signalling destination to the corresponding media gateway (MG, MG1, MG2, MG3).

2. The method for realizing a signalling agent of claim 1, wherein each media gateway (MG, MG1, MG2, MG3) under the same media gateway controller (MGC) has a unique message identifier MID of MEGACO signalling,and the media gateway controller (MGC) distinguishes different media gateways (MG, MG1, MG2, MG3) by the message identifier MID.

3. The method for realizing a signalling agent of claim 1, wherein the message identifier MID of every MEGACO signalling sent to the media gateway (MG, MG1, MG2, MG3) from the media gateway controller (MGC) comprises the message identifier MID of the media gateway (MG, MG1, MG2, MG3), and the agent equipment forwards the signalling to the corresponding media gateway (MG, MG1, MG2, MG3) according to the message identifier MID.

4. The method for realizing a signalling agent of claim 1, wherein the IP address and port of the media gateway controller (MGC) configured on the media gateway (MG, MG1, MG2, MG3) are the same as the second network address and port on the agent equipment.

5. The method for realizing a signalling agent of any one of claims 1 to 4, wherein the registering procedure of step 1 comprises the following steps:
(1) the media gateway (MG, MG1, MG2, MG3) sending the register message to the media gateway controller (MGC), the agent equipment receiving the message on the second network address and corresponding port, recording the IP source address, port number and message identifier MID of the media gateway (MG, MG1, MG2, MG3) sending the message, and generating particular information about the media gateway (MG, MG1, MG2, MG3);
(2) the agent equipment forwarding the registering message to the media gateway controller (MGC) through the first network address;
(3) the media gateway controller (MGC) registering the media gateway (MG, MG1, MG2, MG3) according to the domain name thereof, after registering successfully, the media gateway controller (MGC) returning a reply signalling to the media gateway (MG, MG1, MG2, MG3), the message identifier MID of the reply signalling including information on domain names of the media gateway (MG, MG1, MG2, MG3) and the media gateway controller (MGC);
(4) the agent equipment receiving the reply signalling from the first network address, analyzing the domain name of the media gateway (MG, MG1, MG2, MG3) in the signalling, searching and obtaining the address of the media gateway (MG, MG1, MG2, MG3) from the information recorded, and forwarding to the corresponding media gateway (MG, MG1, MG2, MG3) from the second network address.

6. The method for realizing a signalling agent of claim 1, wherein step 1 further comprises: after the media gateway (MG, MG1, MG2, MG3) registers successfully, for every MEGACO signalling, the agent equipment obtains information on the corresponding media gateway (MG, MG1, MG2, MG3) according to the message identifier MID in the signalling, and completes forwarding a MEGACO message between the media gateway (MG, MG1, MG2, MG3) and the media gateway controller (MGC).

7. The method for realizing a signalling agent of claim 1, wherein step 3 further comprises: if the signalling received by the agent equipment is the reply signalling of establishing the media stream port, recording the termination ID of the media stream port of the media gateway (MG, MG1, MG2, MG3) on the agent equipment, and determining the media stream forwarding port for releasing according to the termination ID.

## Patentansprüche

1. Verfahren zum Ausführen eines Signalisierungsagenten in einem Netzwerksystem, wobei das Netzwerksystem Media Gateways (MG, MG1, MG2, MG3) und einen Media Gateway Controller (MGC) in unterschiedlichen Netzwerken und mindestens eine Agenteneinrichtung an der Grenze der verschiedenen Netzwerke aufweist, wobei das Media Gateway Control (MAGACO) Protokoll zwischen den Media Gateways (MG, MG1, MG2, MG3) und dem Media Gateway Controller (MGC) eingesetzt wird; wobei die Agenteneinrichtung mindestens zwei Netzwerkadressen aufweist, wobei die eine eine erste Netzwerkadresse in dem Netzwerk des Media Gateway Controllers (MGC) und die andere eine zweite Netzwerkadresse in dem Netzwerk auf der Media Gateway Seite ist; wobei das Verfahren folgende Schritte aufweist:
| | |
|---|---|
| Schritt 1: | ein Media Gateway (MG, MG1, MG2, MG3) fordert die Registrierung an dem Media Gateway Controller (MGC) an, und die Agenteneinrichtung zeichnet eine Nachrichtenkennung MID des zu registrierenden Media Gateways (MG, MG1, MG2, MG3) und die Netzwerkadresse entsprechend der von dem Media Gateway (MG, MG1, MG2, MG3) gesendeten Registrierungsnachricht auf; |
| Schritt 2: | die Agenteneinrichtung empfängt die MEGACO Signalisierung zum Er-richten oder Modifizieren eines Media Stream Ports, der von dem Media Gateway Controller (MGC) zu dem Media Gateway (MG, MG1, MG2, MG3) gesendet wird, richtet in der Agenteneinrichtung einen entsprechenden Media Stream Weiterleitungsport und eine Weiterlei-tungstabelle ein oder modifiziert diese, ersetzt die relevanten Medien-informationen in der MEGACO Signalisierung mit den entsprechenden Netzwerkadresseninformationen des Media Stream Weiterleitungs-ports in der Agenteneinrichtung und leitet die Signalisierung an das entsprechende Media Gateway (MG, MG1, MG2, MG3) weiter; |
| Schritt 3: | das Media Gateway (MG, MG1, MG2, MG3) verarbeitet die empfangene MEGACO Signalisierung und gibt eine Antwortsignalisierung zurück; die Agenteneinrichtung modifiziert die Weiterleitungstabelle des entsprechenden Media Stream Weiterleitungsports gemäß der emp- |
| | fangenen Antwortsignalisierung, ersetzt die Medieninformation in der Signalisierung mit der entsprechenden Netzwerkadresseninformation des Media Stream Weiterleitungsports in der Agenteneinrichtung und leitet die Signalisierung an den Media Gateway Controller (MGC) weiter; |
| Schritt 4: | der Media Gateway Controller (MGC) sendet eine Subtraktionssignali-sierung zur Freigabe des Media Stream Ports an das Media Gateway (MG, MG1, MG2, MG3), nachdem der Anruf beendet ist, die Agenten-einrichtung gibt den entsprechenden Media Stream Weiterleitungsport nach dem Empfang der Signalisierung frei, und leitet die Signalisierung an das entsprechende Media Gateway (MG, MG1, MG2, MG3) weiter; |
wobei das Verfahren weiterhin folgenden Schritt aufweist: für eine MEGACO Signalisierung, die von dem Media Stream Port des Media Gateways (MG, MG1, MG2, MG3) nicht betroffen ist, leitet die Agenteneinrichtung die Signalisierung gemäß der Nachrichtenkennung MID in dem Signalisierungsziel an das entsprechende Media Gateway (MG, MG1, MG2, MG3) weiter.

2. Verfahren zum Ausführen eines Signalisierungsagenten nach Anspruch 1, wobei jedes Media Gateway (MG, MG1, MG2, MG3) unter demselben Media Gateway Controller (MGC) eine eindeutige Nachrichtenkennung MID der MEGACO Signalisierung aufweist, und wobei der Media Gateway Controller (MGC) unterschiedliche Media Gateways (MG, MG1, MG2, MG3) mit Hilfe der Nachrichtenkennung MID unterscheidet.

3. Verfahren zum Ausführen eines Signalisierungsagenten nach Anspruch 1, wobei die Nachrichtenkennung MID jeder MEGACO Signalisierung, die zu dem Media Gateway (MG, MG1, MG2, MG3) von dem Media Gateway Controller (MGC) gesendet wird, die Nachrichtenkennung MID des Media Gateways (MG, MG1, MG2, MG3) aufweist und wobei die Agenteneinrichtung die Signalisierung an das entsprechende Media Gateway (MG, MG1, MG2, MG3) entsprechend der Nachrichtenkennung MID weiterleitet.

4. Verfahren zum Ausführen eines Signalisierungsagenten nach Anspruch 1, wobei IP-Adressen und der Port des Media Gateway Controllers (MGC), die in dem Media Gateway (MG, MG1, MG2, MG3) konfiguriert sind, dieselben sind wie die zweite Netzwerkadresse und der Port in der Agenteneinrichtung.

5. Verfahren zum Ausführen eines Signalisierungsagenten nach einem der Ansprüche 1 bis 4, wobei der Registrierungsvorgang aus Schritt 1 die folgenden Schritte aufweist:
(1) das Media Gateway (MG, MG1, MG2, MG3) sendet die Registrierungsnachricht an den Media Gateway Controller (MGC), die Agenteneinrichtung empfängt die Nachricht auf der zweiten Netzwerkadresse und dem entsprechenden Port, zeichnet die Quell-IP-Adresse, Portnummer und Nachrichtenkennung MID des Media Gateways (MG, MG1, MG2, MG3), das die Nachricht sendet, auf und erzeugt bestimmte Informationen über das Media Gateway (MG, MG1, MG2, MG3);
(2) die Agenteneinrichtung leitet die Registrierungsnachricht an den Media Gateway Controller (MGC) über die erste Netzwerkadresse weiter;
(3) der Media Gateway Controller (MGC) registriert das Media Gateway (MG, MG1, MG2, MG3) entsprechend dessen Domainnamen, nachdem erfolgreich registriert wurde, der Media Gateway Controller (MGC) gibt eine Antwortsignalisierung an das Media Gateway (MG, MG1, MG2, MG3) zurück, wobei die Nachrichtenkennung MID der Antwortsignalisierung Informationen über Domainnamen des Media Gateways (MG, MG1, MG2, MG3) und den Media Gateway Controller (MGC) umfasst;
(4) die Agenteneinrichtung empfängt die Antwortsignalisierung von der ersten Netzwerkadresse, analysiert den Domainnamen des Media Gateways (MG, MG1, MG2, MG3) in der Signalisierung, sucht und erhält die Adresse des Media Gateways (MG, MG1, MG2, MG3) aus der aufgezeichneten Information und leitet sie an das entsprechende Media Gateway (MG, MG1, MG2, MG3) aus der zweiten Netzwerkadresse weiter.

6. Verfahren zum Ausführen eines Signalisierungsagenten nach Anspruch 1, wobei Schritt 1 des Weiteren umfasst: nachdem das Media Gateway (MG, MG1, MG2, MG3) erfolgreich registriert ist, ermittelt die Agenteneinrichtung für jede MEGACO Signalisierung Informationen über das entsprechende Media Gateway (MG, MG1, MG2, MG3) gemäß der Nachrichtenkennung MID in der Signalisierung und vollendet die Weiterleitung einer MEGACO Nachricht zwischen dem Media Gateway (MG, MG1, MG2, MG3) und dem Media Gateway Controller (MGC).

7. Verfahren zum Ausführen eines Signalisierungsagenten, wobei Schritt 3 des Weiteren umfasst: wenn die von der Agenteneinrichtung empfangene Signalisierung die Antwortsignalisierung des Einrichtens des Media Stream Ports ist, Aufzeichnen der Zielkennung (Termination ID) des Media Stream Ports des Media Gateways (MG, MG1, MG2, MG3) in der Agenteneinrichtung und Bestimmen des Media Stream Weiterleitungsports zur Freigabe gemäß der Zielkennung.

## Revendications

1. Procédé pour réaliser un agent de signalisation dans un système de réseau, le système de réseau comprenant des passerelles de média (MG, MG1, MG2, MG3) et un contrôleur de passerelle de média (MGC) dans différents réseaux, et au moins un équipement d'agent sur une frontière des différents réseaux, dans lequel le protocole de contrôle de passerelle de média MEGACO est adopté entre les passerelles de média (MG, MG1, MG2, MG3) et le contrôleur de passerelle de média (MGC) ; dans lequel l'équipement d'agent a au moins deux adresses réseau, l'une étant une première adresse réseau dans le réseau du contrôleur de passerelle de média (MGC), l'autre étant une seconde adresse réseau dans le réseau du côté des passerelles de média ; le procédé comprenant les étapes suivantes :
étape 1 : une passerelle de média (MG, MG1, MG2, MG3) demande à s'enregistrer auprès du contrôleur de passerelle de média (MGC), et l'équipement d'agent enregistre un identifiant de message MID de la passerelle de média (MG, MG1, MG2, MG3) à enregistrer et l'adresse réseau en fonction du message d'enregistrement envoyé par la passerelle de média (MG, MG1, MG2, MG3) ;
étape 2 : l'équipement d'agent reçoit une signalisation MEGACO pour établir ou modifier un port de flux de média envoyé à la passerelle de média (MG, MG1, MG2, MG3) à partir du contrôleur de passerelle de média (MGC), établit ou modifie un port de transfert de flux média correspondant et une table de transfert sur l'équipement d'agent, remplace des informations média pertinentes dans la signalisation MEGACO par les informations d'adresse réseau correspondantes du port de transfert de flux média sur l'équipement d'agent, et transfère la signalisation à la passerelle de média (MG, MG1, MG2, MG3) correspondante ;
étape 3 : la passerelle de média (MG, MG1, MG2, MG3) traite la signalisation MEGACO reçue, et renvoie une signalisation de réponse ; l'équipement d'agent modifie la table de transfert du port de transfert de flux média correspondant en fonction de la signalisation de réponse reçue, remplace les informations média dans la signalisation par les informations d'adresse réseau correspondantes du port de transfert de flux média sur l'agent d'équipement, et transfère au contrôleur de passerelle de média ;
étape 4 : le contrôleur de passerelle de média (MGC) envoie une signalisation de soustraction pour libérer le port de flux média à la passerelle de média (MG, MG1, MG2, MG3) après la fin de l'appel, l'équipement d'agent libère le port de transfert de flux média correspondant après réception de la signalisation, et transfère la signalisation à la passerelle de média (MG, MG1, MG2, MG3) correspondante ;
comprenant en outre l'étape de : pour une signalisation MEGACO qui n'est pas concernée par le port de flux média de la passerelle de média (MG, MG1, MG2, MG3), l'équipement d'agent transfère la signalisation en fonction de l'identifiant de message MID dans la destination de signalisation à la passerelle de média (MG, MG1, MG2, MG3) correspondante.

2. Procédé pour réaliser un agent de signalisation selon la revendication 1, dans lequel chaque passerelle de média (MG, MG1, MG2, MG3) sous le même contrôleur de passerelle de média (MGC) a un identifiant de message MID unique de signalisation MEGACO, et le contrôleur de passerelle de média (MGC) distingue différentes passerelles de média (MG, MG1, MG2, MG3) par l'identifiant de message MID.

3. Procédé pour réaliser un agent de signalisation selon la revendication 1, dans lequel l'identifiant de message MID de chaque signalisation MEGACO envoyée à la passerelle de média (MG, MG1, MG2, MG3) à partir du contrôleur de passerelle de média (MGC) comprend l'identifiant de message MID de la passerelle de média (MG, MG1, MG2, MG3), et l'équipement d'agent transfère la signalisation à la passerelle de média (MG, MG1, MG2, MG3) correspondante en fonction de l'identifiant de message MID.

4. Procédé pour réaliser un agent de signalisation selon la revendication 1, dans lequel l'adresse IP et le port du contrôleur de passerelle de média (MGC) configuré sur la passerelle de média (MG, MG1, MG2, MG3) sont les mêmes que la seconde adresse réseau et le port sur l'agent d'équipement.

5. Procédé pour réaliser un agent de signalisation selon l'une quelconque des revendications 1 à 4, dans lequel la procédure d'enregistrement de l'étape 1 comprend les étapes suivantes :
(1) la passerelle de média (MG, MG1, MG2, MG3) envoie le message d'enregistrement au contrôleur de passerelle de média (MGC), l'équipement d'agent reçoit le message sur la seconde adresse réseau et le port correspondant, enregistre l'adresse IP source, le numéro de port et l'identifiant de message MID de la passerelle de média (MG, MG1, MG2, MG3) envoyant le message, et génère des informations particulières concernant la passerelle de média (MG, MG1, MG2, MG3) ;
(2) l'équipement d'agent transfère le message d'enregistrement au contrôleur de passerelle de média (MGC) via la première adresse réseau ;
(3) le contrôleur de passerelle de média (MGC) enregistre la passerelle de média (MG, MG1, MG2, MG3) en fonction du nom de domaine de celle-ci, après enregistrement réussi, le contrôleur de passerelle de média (MGC) retourne une signalisation de réponse à la passerelle de média (MG, MG1, MG2, MG3), l'identifiant de message MID de la signalisation de réponse comprenant des informations sur des noms de domaine de la passerelle de média (MG, MG1, MG2, MG3) et du contrôleur de passerelle de média (MGC) ;
(4) l'équipement d'agent reçoit la signalisation de réponse provenant de la première adresse réseau, analyse le nom de domaine de la passerelle de média (MG, MG1, MG2, MG3) dans la signalisation, recherche et obtient l'adresse de la passerelle de média (MG, MG1, MG2, MG3) à partir des informations enregistrées, et transfère à la passerelle de média (MG, MG1, MG2, MG3) correspondante à partir de la seconde adresse réseau.
(6) Procédé pour réaliser un agent de signalisation selon la revendication 1, dans lequel l'étape 1 comprend en outre : après que la passerelle de média (MG, MG1, MG2, MG3) ait été enregistrée avec succès, pour chaque signalisation MEGACO, l'équipement d'agent obtient des informations sur la passerelle de média (MG, MG1, MG2, MG3) correspondante en fonction de l'identifiant de message MID dans la signalisation, et achève le transfert d'un message MEGACO entre la passerelle de média (MG, MG1, MG2, MG3) et le contrôleur de passerelle de média (MGC).
(7) Procédé pour réaliser un agent de signalisation selon la revendication 1, dans lequel l'étape 3 comprend en outre : si la signalisation reçue par l'équipement d'agent est la signalisation de réponse d'établissement du port de flux média, enregistrer l'ID de terminaison du port de flux média de la passerelle de média (MG, MG1, MG2, MG3) sur l'équipement d'agent, et déterminer le port de transfert de flux média pour une libération en fonction de l'ID de terminaison.
